(19) Europäisches Patentamt
European Patent Office
Office européen des brevets

(11) EP 4 556 843 A1

(12) **EUROPEAN PATENT APPLICATION**
published in accordance with Art. 153(4) EPC

(43) Date of publication:
21.05.2025 Bulletin 2025/21

(51) International Patent Classification (IPC):
*G01B 11/24* (2006.01)     *C21D 9/56* (2006.01)

(21) Application number: 23867893.2

(52) Cooperative Patent Classification (CPC):
C21D 9/56; G01B 11/24

(22) Date of filing: 28.07.2023

(86) International application number:
PCT/JP2023/027674

(87) International publication number:
WO 2024/062767 (28.03.2024 Gazette 2024/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.09.2022 JP 2022150049

(71) Applicant: JFE Steel Corporation
Tokyo 100-0011 (JP)

(72) Inventors:
• KOBAYASHI, Hirokazu
Tokyo 100-0011 (JP)
• NAKAMURA, Mitsuru
Tokyo 100-0011 (JP)
• KIMURA, Yukio
Tokyo 100-0011 (JP)

(74) Representative: Hoffmann Eitle
Patent- und Rechtsanwälte PartmbB
Arabellastraße 30
81925 München (DE)

(54) **WARPED METAL BELT SHAPE ESTIMATION METHOD, METAL BELT ACCEPTANCE DETERMINATION METHOD, METAL BELT MANUFACTURING METHOD, AND WARPED METAL BELT SHAPE ESTIMATION FACILITY**

(57)     To provide a metal-strip warped-shape estimation method capable of estimating, for the warped shape in the width direction caused by rapid cooling of a metal strip, based on the warped shape in the width direction with tension applied in the longitudinal direction, the warped shape in the width direction with the tension relieved, a metal-strip acceptability determination method, and a metal-strip warped-shape estimation device.

A metal-strip warped-shape estimation method for estimating, based on a shape in a width direction of a metal strip in a tension-applied state where tension in a longitudinal direction is applied, a warped shape in the width direction of the metal strip in a no-tension state where the tension is relieved, includes: a widthwise-shape measurement step of measuring a widthwise shape distribution of the metal strip in the tension-applied state; an approximation-curve calculation step of calculating an approximation curve that approximates the widthwise shape distribution, measured in the widthwise-shape measurement step, with a quadratic curve or a circular arc; and a warped-shape estimation step of estimating the warped shape in the width direction of the metal strip in the no-tension state using the widthwise shape distribution and the approximation curve.

FIG. 3

EP 4 556 843 A1

**Description**

Technical Field

The present invention relates to a method for estimating the warped shape of a metal strip conveyed in a continuous annealing facility or the like, a metal-strip acceptability determination method, a metal-strip manufacturing method, and metal-strip warped-shape estimation equipment.

Background Art

In a continuous annealing facility that processes metal strips, it is important to control heat treatment conditions, such as heating and cooling, to impart the mechanical properties required for the metal strips. In particular, in the manufacture of high-strength steel sheets, from the viewpoint of improving the press formability, the cooling rate of the heated metal strip is increased, and tempering treatment in which the metal strip is reheated is performed after cooling.

The continuous annealing facility includes a heating zone, a soaking zone, and a cooling zone. Cooling methods employed in the cooling zone include liquid quenching, roll cooling, air-water mixture (mist) cooling, gas jet cooling, and the like. An appropriate cooling method is selected accordingly in order to control the materials of the metal strip. Among these methods, liquid quenching has the fastest cooling rate. Liquid quenching uses fewer alloying elements added to enhance the strength of the metal strip, making it suitable for manufacturing high-strength steel sheets. Liquid quenching involves immersing a heated metal strip in liquid while simultaneously injecting cooling liquid onto the metal strip from slit nozzles provided within the liquid, thereby performing rapid cooling.

When the metal strip is rapidly cooled, shape defects of the metal strip occur, due to the effects of the thermal contraction of the metal strip and the volume expansion associated with the phase transformation of the metallic microstructure. Shape defects caused by the rapid cooling of the metal strip are such that, due to the tension applied along the longitudinal direction to convey the metal strip, the warping in the longitudinal direction is apparently suppressed. However, due to the residual stress (residual moment) that has potentially developed, the warping in the longitudinal direction results in warping in the width direction. In this case, in the width direction of the metal strip, the faster the cooling rate applied to the metal strip, the warping appears not only with a quadratic curve or a circular arc shape but also as warping with a W-shape or an uneven shape that can be approximated by a higher-order function.

Additionally, the quality inspection of the shape of the metal strip involves relieving the tension applied to the metal strip, cutting it into a sheet shape, and measuring the warp amount, which is used to determine whether it is acceptable or not. However, in a continuous annealing facility for manufacturing metal strips, the warp amount measured while the metal strip is being conveyed and the warp amount measured after relieving the tension applied to the strip and cutting it into a sheet shape are not necessarily identical. Therefore, in a continuous annealing facility for manufacturing metal strips, it becomes difficult to conduct highly accurate quality inspections of the warped shape while the metal strip is being conveyed. If highly accurate quality inspections of the warped shape are to be conducted, the conveyance of the metal strip in the continuous annealing facility must be temporarily stopped, the tension relieved, and the warp amount measured, which leads to a reduction in production efficiency. Alternatively, it may be necessary to transport the metal strip to a separate inspection line, different from the continuous annealing facility, to conduct quality inspections. This results in an additional step for quality inspections, leading to a reduction in production efficiency and an increase in costs.

In contrast, Patent Literature 1 discloses a flatness control device that controls the temperature in the width direction of a metal strip in a cooling section in a continuous annealing facility, in order to improve the flatness of the metal strip in a no-tension state. Patent Literature 1 discloses a method for comparing the shape in the width direction of the metal strip with tension applied to the shape in the width direction with the tension relieved, and controlling the temperature in the width direction of the metal strip based on the comparison result.

Patent Literature 2 discloses a method for estimating the residual bending moment occurring in the longitudinal and width directions of a metal strip by using the warp amount in the width direction of the metal strip with tension applied and the applied tension itself. Patent Literature 2 further discloses a method for calculating the warp amount in the longitudinal direction and the warp amount in the width direction with the tension relieved and the metal strip cut into a sheet shape, by using a relational expression that represents elastic deformation using the estimated residual bending moment.

Citation List

Patent Literature

PTL 1: Japanese Unexamined Patent Application Publication No. 2-66125

PTL 2: Japanese Unexamined Patent Application Publication No. 6-102036

Summary of Invention

Technical Problem

The metal-strip flatness control device described in Patent Literature 1, however, requires the collection of actual data of both the shape in the width direction of the metal strip with tension applied and the shape in the width direction with the tension relieved. In this case, it is necessary to collect actual data based on the metal strip's thickness, width, steel grade classification, etc. This requires repeatedly stopping the line and relieving the tension during the manufacturing process in the continuous annealing facility, which leads to a reduction in the production efficiency of the continuous annealing facility. In addition, the shape of the metal strip described in Patent Literature 1 refers to the steepness, which is represented by the ratio of the vertical displacement distance to the longitudinal displacement width, as illustrated in Fig. 2 of Patent Literature 1. That is, the shape of the metal strip in Patent Literature 1 refers to the wavy shape, such as edge waves or center buckle that occurs in the metal strip. Therefore, the shape of the metal strip in Patent Literature 1 is different from the warped shape in the width direction, which serves as the inspection target for the quality inspection of the metal strip. Therefore, it is difficult to apply the configuration described in Patent Literature 1 to the warped shape in the width direction of the metal strip.

Additionally, the method described in Patent Literature 2 is a method for calculating the warp amount in the longitudinal direction and the warp amount in the width direction of a metal strip with the tension relieved, based on the estimated residual bending moment, using a relational expression representing elastic deformation. The relational expression representing the elastic deformation may be expressed by a higher-order function, such as a quartic or sixth-degree function relative to the coordinates in the plane of the metal strip. However, Patent Literature 2 assumes that the residual bending moment of the metal strip develops uniformly (evenly) within the plane of the metal strip, and therefore it cannot be applied when the residual bending moment is distributed unevenly. In other words, the method described in Patent Literature 2 is not applicable in cases where uneven residual stress develops within the plane of the metal strip due to rapid cooling, resulting in an uneven warped shape. If the method described in Patent Literature 2 is applied to a metal strip with an uneven warped shape, there is a problem that the accuracy of estimating the warped shape decreases.

In view of the above circumstances, it is an object of the present invention to provide a metal-strip warped-shape estimation method capable of, for the warped shape in the width direction caused by rapid cooling of a metal strip, based on the warped shape in the width direction with tension applied in the longitudinal direction, estimating the warped shape in the width direction with the tension relieved, a metal-strip acceptability determination method, a metal-strip manufacturing method, and metal-strip warped-shape estimation equipment.

Solution to Problem

The gist configuration of the present invention for solving the above-mentioned problem is as follows.

[1] A metal-strip warped-shape estimation method for estimating, based on a shape in a width direction of a metal strip in a tension-applied state where tension in a longitudinal direction is applied, a warped shape in the width direction of the metal strip in a no-tension state where the tension is relieved, including: a widthwise-shape measurement step of measuring a widthwise shape distribution of the metal strip in the tension-applied state; an approximation-curve calculation step of calculating an approximation curve that approximates the widthwise shape distribution, measured in the widthwise-shape measurement step, with a quadratic curve or a circular arc; and a warped-shape estimation step of estimating the warped shape in the width direction of the metal strip in the no-tension state using the widthwise shape distribution and the approximation curve.

[2] The metal-strip warped-shape estimation method according to [1], wherein, in the widthwise-shape measurement step, the widthwise shape distribution of the metal strip is measured by a distance measurement method or a light section method.

[3] The metal-strip warped-shape estimation method according to [1] or [2], wherein the widthwise-shape measurement step is executed after the metal strip is cooled by a cooling section in a continuous annealing facility and before the metal strip is wound by a coiler in the continuous annealing facility.

[4] A metal-strip acceptability determination method for determining acceptability of the metal strip based on the warped shape of the metal strip in the no-tension state, estimated by the metal-strip warped-shape estimation method according to any one of [1] to [3].

[5] A metal-strip manufacturing method for determining acceptability of the metal strip using the metal-strip acceptability method according to [4], and manufacturing the metal strip determined to be acceptable.

[6] Metal-strip warped-shape estimation equipment that estimates, based on a shape in a width direction of a metal strip in a tension-applied state where tension in a longitudinal direction is applied, a warped shape in the width direction of the metal strip in a no-tension state where the tension is relieved, including: a widthwise-shape measurement device that measures a widthwise shape distribution of the metal strip in the tension-applied state; and a metal-strip warped-shape estimation device that estimates the warped shape in the width direction of the metal strip in the no-tension state, wherein the metal-strip warped-shape estimation device includes: an acquisition section that acquires the widthwise shape distribution of the metal strip from the widthwise-shape measurement device; an approximation-curve calculation section that calculates an approximation curve that approximates the widthwise shape distribution, measured by the widthwise-shape measurement device, with a quadratic curve or a circular arc; and a warped-shape estimation section that estimates the warped shape in the width direction of the metal strip in the no-tension state using the widthwise shape distribution and the approximation curve.

[7] The metal-strip warped-shape estimation equipment according to [6], wherein the widthwise-shape measurement device measures the widthwise shape distribution of the metal strip using a distance measurement method or a light section method.

[8] The metal-strip warped-shape estimation equipment according to [6] or [7], wherein the widthwise-shape measurement device is disposed between a cooling section and a coiler in a continuous annealing facility that performs heat treatment on the metal strip.

Advantageous Effects of Invention

According to the present invention, for the warped shape in the width direction caused by rapid cooling of a metal strip, based on the warped shape in the width direction with tension applied in the longitudinal direction, the warped shape in the width direction with the tension relieved can be estimated.

Brief Description of Drawings

[Fig. 1] Fig. 1 is a side schematic diagram illustrating an example of a continuous annealing facility.
[Fig. 2] Fig. 2 is a side schematic diagram illustrating an example of a cooling section.
[Fig. 3] Fig. 3 is a simplified functional block diagram of warped-shape estimation equipment.
[Fig. 4] Fig. 4 is a simplified illustration of the state in which a metal strip is measured with a laser rangefinder.
[Fig. 5] Fig. 5 is a simplified illustration of the state in which the metal strip is measured with multiple laser rangefinders.
[Fig. 6] Fig. 6 is a diagram illustrating an example of the warped shape in the width direction of the metal strip, measured by a widthwise-shape measurement device.
[Fig. 7] Fig. 7 is a diagram schematically illustrating the strain that develops on the inner surface of the metal strip when the metal strip is bent in the longitudinal direction.
[Fig. 8] Fig. 8 is a diagram illustrating an example of an approximation curve calculated by an approximation-curve calculation section.
[Fig. 9] Fig. 9 is a diagram illustrating another example of an approximation curve calculated by the approximation-curve calculation section.
[Fig. 10] Fig. 10 is a diagram illustrating an example of the warped shape in a no-tension state, estimated using a widthwise shape distribution in a tension-applied state and its approximation curve.
[Fig. 11] Fig. 11 is a diagram illustrating an example that compares the estimated warped shape with the measured values of the warped shape in a no-tension state.
[Fig. 12] Fig. 12 is a diagram illustrating another example of the warped shape in a no-tension state, estimated using a widthwise shape distribution in a tension-applied state and its approximation curve.
[Fig. 13] Fig. 13 is a diagram illustrating another example that compares the estimated warped shape with the measured values of the warped shape in a no-tension state. Description of Embodiments

Hereinafter, the present invention will be described through an embodiment of the present invention, using a continuous annealing facility that processes a metal strip as an example. Here, each drawing is schematic and may differ from actual one. Furthermore, the following embodiment illustrates devices and methods to embody the technical concept of the present invention and is not intended to limit the configuration to those described below. That is, the technical concept of the present invention can be modified in various ways within the technical scope described in the claims.

A continuous annealing facility is a facility that performs heat treatment on a metal sheet that has been reduced to a specified thickness through hot rolling, pickling, and cold rolling steps. Since the metal sheet is wound into a coil after the hot rolling step and then undergoes heat treatment and other treatments, the metal sheet will be referred to as a "metal strip" in the present embodiment. Since the continuous annealing facility is primarily used for the heat treatment of steel sheets, the term "metal strip" predominantly refers to a steel strip. When a steel strip is cooled, it is prone to forming warps in the width direction, with a W-shape or an uneven shape that can be approximated by a higher-order function. In particular, since warps with an uneven shape are more likely to form in high-strength steel sheets, it is preferable to target high-strength steel sheets with a tensile strength of 980 MPa or higher. For the metal strip, the following ranges are preferred: thickness: 0.4 to 3.2 mm, width: 700 to 1800 mm, and length: 600 to 4000 m.

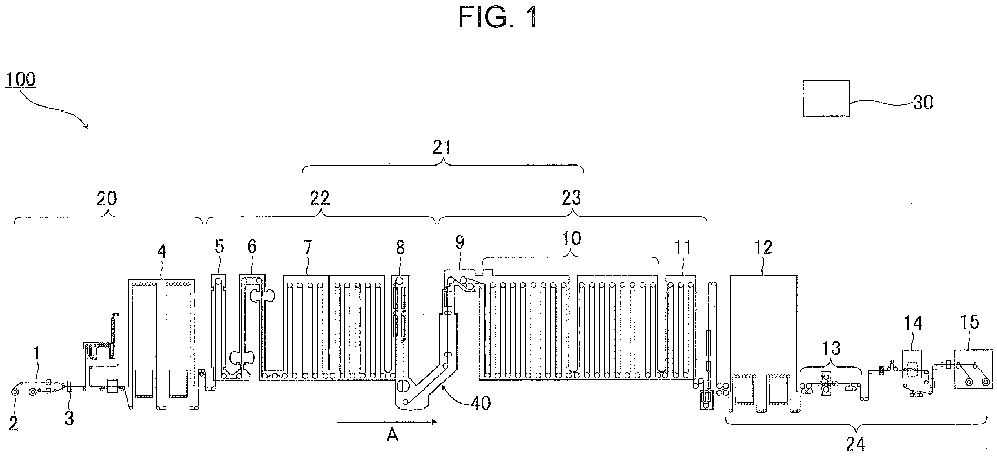

Referring to Fig. 1, the configuration of a continuous annealing facility 100 will be described. Fig. 1 illustrates a side schematic diagram of the continuous annealing facility 100. In Fig. 1, a metal strip 1 is conveyed in conveyance direction A.

The continuous annealing facility includes entry-side equipment 20, furnace equipment 21, and exit-side equipment 24. The entry-side equipment 20 includes a payoff reel 2, a welding machine 3, and an entry-side looper 4. The furnace equipment 21 includes annealing equipment 22 and reheating equipment 23. The annealing equipment 22 includes a preheating zone 5, a heating zone 6, a soaking zone 7, and a cooling zone 8. Installing the preheating zone 5 is arbitrary. The reheating equipment 23 includes a reheating zone 9, an overaging zone 10, and a final cooling zone 11. The reheating zone 9 includes an induction heating device. The exit-side equipment 24 includes an exit-side looper 12, shape correction equipment 13, an inspection table 14, and a coiler 15.

The annealing step of the metal strip 1, executed by the continuous annealing facility 100, involves heating the metal strip 1 from a temperature near room temperature, maintaining it at a predetermined temperature, and then cooling it back to a temperature near room temperature. The continuous annealing facility 100 performs the annealing step by at least using the heating zone 6, the soaking zone 7, and the cooling zone 8. The reheating step is a step in which the metal strip 1, having passed through the cooling zone 8, undergoes an overaging process. The continuous annealing facility 100 performs the reheating step in the reheating zone 9, the overaging zone 10, and the final cooling zone 11.

The heating zone 6 includes heating equipment that increases the temperature of the metal strip 1. The heating zone 6 heats the metal strip 1 to a preset temperature within a range of 600 to 900°C in accordance with the chemical composition of the metal strip 1. The heating zone 6 includes a direct-fired or radiant combustion burner. The soaking zone 7 is equipment that maintains the metal strip 1 at a predetermined temperature.

The cooling zone 8 cools the metal strip 1 to a predetermined temperature. The cooling zone 8 implements, as a cooling method, liquid cooling, gas jet cooling, roll cooling, mist cooling (gas-liquid mixture cooling), and the like. In the present embodiment, as illustrated in Fig. 1, liquid cooling is implemented. Liquid cooling cools the metal strip 1 through cooling using water (water quenching). Liquid cooling implements cooling by immersing the metal strip 1 in a dipping tank to cool it. Gas jet cooling blows gas from nozzles onto the surface of the metal strip 1 to cool it. Roll cooling brings the metal strip 1 into contact with water-cooled rolls to cool it. Mist cooling sprays water in a fine mist to cool the metal strip 1 by absorbing the heat of vaporization. In mist cooling, the size of the water droplets sprayed is 0.1 to 1 mm.

The reheating equipment 23 is disposed downstream of the cooling zone 8. The reheating equipment 23 includes an induction heating device that heats the metal strip 1 in the reheating zone 9. Using the induction heating device, the reheating equipment 23 reheats the metal strip 1 that has been cooled to a predetermined temperature in the cooling zone 8 to a temperature of 300 to 400°C. The overaging zone 10 is equipment that performs an overaging process in which the reheated metal strip 1 is held for a predetermined period of time. The final cooling zone 11 consists of equipment that finally cools the overaged metal strip 1 to a temperature near room temperature. In the continuous annealing facility, installing the reheating equipment 23 is arbitrary.

The exit-side looper 12 is equipment that temporarily stores the metal strip 1 to make adjustments between the line speed of the metal strip 1 in the furnace equipment 21 and the processing speed of the exit-side equipment 24. The shape correction equipment 13 is equipment for flattening the shape of the metal strip 1. The shape correction equipment 13 includes either or both of a temper rolling mill and a tension leveler. The inspection table 14 is equipment at which quality inspections on the metal strip 1 are conducted. At the inspection table 14, quality inspections are conducted on the metal strip 1 to check its dimensions, shape (flatness, warped shape), surface quality, and the like. Quality inspections of the metal strip 1 are conducted while the metal strip 1 is conveyed; however, if necessary, the inspector may perform it at a reduced line speed. Conventionally, when inspecting the shape of the metal strip 1, the conveyance of the metal strip 1 is temporarily stopped at the inspection table 14, the tension applied to the metal strip 1 is relieved, and quality inspections are then conducted. The coiler 15 is equipment that winds the metal strip 1 in a coil shape. The metal strip 1, which is wound into a coil, may be shipped as a product coil. The metal strip, which is wound into a coil, may either be sent to a recoiling line, where adjustments to the dimensions and weight of the metal strip are made, samples for quality inspections are collected, shape and dimensional inspections are conducted, and the coil is rewound. Additionally, the metal strip, which is wound into a coil, may be sent to surface treatment equipment for plating the metal strip, where surface treatment is performed.

Since quality inspections of the shape of the metal strip 1 at the inspection table 14 involve temporarily stopping the conveyance of the metal strip 1 and relieving the tension applied to it, there is a problem of reduced production efficiency of the continuous annealing facility. Therefore, there are some cases in which, in the continuous annealing facility, the metal strip 1 is wound into a coil by the coiler 15 without stopping the conveyance of the metal strip 1, and then sent to a recoiling line, where quality inspections of the shape of the metal strip are conducted. However, in this case, an additional manufacturing step for the metal strip is required, resulting in an issue of increased production costs.

In contrast, in the present embodiment, in the continuous annealing facility 100, for the metal strip 1 conveyed in a state where tension is applied in the longitudinal direction (hereinafter also referred to as a "tension-applied state"), the warped shape in the width direction in a state where the tension is relieved (hereinafter also referred to as a "no-tension state") can be estimated. Therefore, it is unnecessary to stop the conveyance of the metal strip 1, or transfer the coiled metal strip to a recoiling line, where shape-related quality inspections are conducted.

The cooling zone 8 includes a cooling section 40 that cools the metal strip 1 to a predetermined temperature through liquid cooling. For cooling the metal strip 1, a cooling method that employs liquid cooling is preferred. Liquid cooling enables the rapid cooling of the metal strip 1 by immersing the metal strip 1 in a dipping tank to cool it. Liquid cooling allows the cooling rate of the metal strip 1 to be adjusted by changing the line speed of the metal strip 1. Therefore, liquid cooling allows the reduction of alloy elements added to enhance the strength of the metal strip 1 by adjusting the cooling rate of the metal strip 1, which is thus suitable for manufacturing high-strength steel sheets.

The cooling section 40 cools the metal strip 1 that has been heated to a recrystallization temperature or higher or an austenite transformation start temperature (AC3) or higher in the heating zone 6. The cooling section 40 cools the metal strip 1 heated in the heating zone 6 to a temperature below a martensite start temperature (Ms) or a bainite transformation start temperature (Bf).

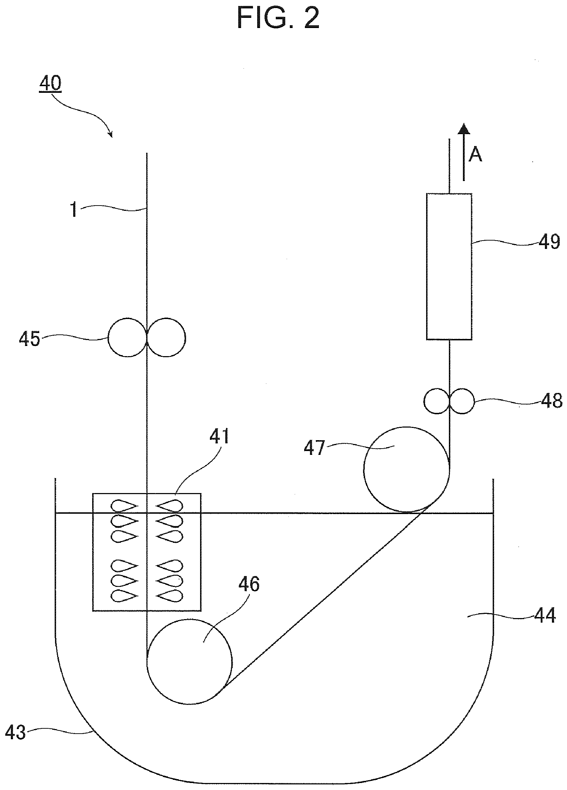

Here, the cooling method and cooling configuration of the cooling section 40 will be described using Fig. 2. Fig. 2 illustrates a side schematic diagram of the cooling section 40. The cooling section 40 includes a water cooling nozzle unit 41, a dipping tank 43, pinch rolls 45, deflector rolls 46 and 47, wringer rolls 48, and a drying furnace 49. In the cooling section 40, the pinch rolls 45 are provided arbitrarily.

The water cooling nozzle unit 41 has water injection nozzles. The pinch rolls 45 prevent fluttering (swaying) of the metal strip 1. The wringer rolls 48 remove the water adhered to the metal strip 1 that has passed through the dipping tank 43. The drying furnace 49 from which the water has been removed by the wringer rolls 48 dries the metal strip 1. After dried by the drying furnace 49, the metal strip 1 is conveyed to the reheating zone 9.

The dipping tank 43 is configured in a container shape in order to store cooling water 44 used for immersing and cooling the metal strip 1. In order to suppress a temperature rise of the cooling water 44 stored in the dipping tank 43 and maintain the water temperature of the cooling water 44 within a predetermined range, a cooling chiller (cooling water circulation device) used for circulating the cooling water 44 to maintain its temperature may be provided.

The water cooling nozzle unit 41 injects cooling water to the metal strip 1 to cool it. The water cooling nozzle unit 41 is equipped with multiple pairs of water injection nozzles, along conveyance direction A of the metal strip 1, for injecting cooling water onto the front and back sides of the metal strip 1 being conveyed. Using the multiple pairs of water injection nozzles, the water cooling nozzle unit 41 is able to inject cooling water onto the front and back sides of the metal strip 1, thereby cooling the metal strip 1 that has passed through the soaking zone 7.

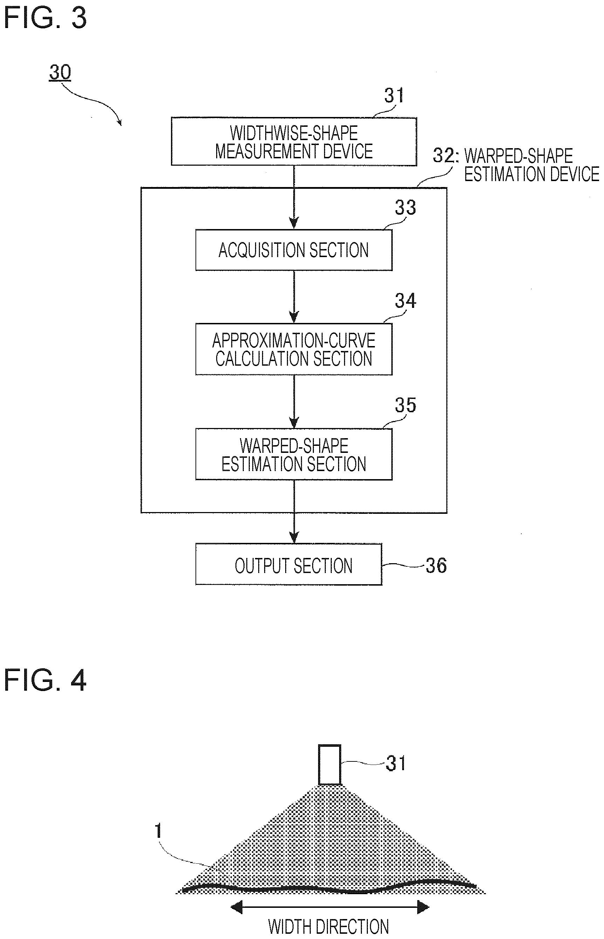

Next, warped-shape estimation equipment 30 for estimating the warped shape of the metal strip 1 will be described using Fig. 3. Fig. 3 illustrates a simplified functional block diagram of the warped-shape estimation equipment 30. The warped-shape estimation equipment 30 includes a widthwise-shape measurement device 31 and a warped-shape estimation device 32. The warped-shape estimation device 32 is a general-purpose computer, such as a workstation or a personal computer, and includes an acquisition section 33, an approximation-curve calculation section 34, and a warped-shape estimation section 35. The widthwise-shape measurement device 31 measures the shape distribution in the width direction of the metal strip (hereinafter also referred to as the "widthwise shape distribution") in a tension-applied state of the metal strip 1. The acquisition section 33 acquires the widthwise shape distribution of the metal strip 1 from the widthwise-shape measurement device 31. Using the widthwise shape distribution acquired from the acquisition section 33, the approximation-curve calculation section 34 calculates an approximation curve that approximates the shape distribution with a quadratic curve or a circular arc. Using the widthwise shape distribution acquired by the acquisition section 33 and the approximation curve calculated by the approximation-curve calculation section 34, the warped-shape estimation section 35 estimates the warped shape in the width direction of the metal strip 1 in a no-tension state. An output section 36 may output the estimated result of the warped shape in the width direction of the metal strip 1 in a no-tension state, estimated by the warped-shape estimation device 32. The output section 36 may be a display screen such as a liquid crystal display. By displaying the estimated result of the warped shape in the width direction of the metal strip 1 in a no-tension state on the output section 36, the inspector conducting the quality inspection of the metal strip 1 is able to determine its acceptability regarding the warped shape.

In addition, a metal-strip warped-shape estimation method according to the present invention can be implemented by using the warped-shape estimation equipment 30. Specifically, the widthwise-shape measurement device 31 executes a widthwise-shape measurement step of measuring the widthwise shape distribution of the metal strip 1 in a tension-applied state. The approximation-curve calculation section 34 performs an approximation-curve calculation step of calculating an approximation curve by approximating the widthwise shape distribution, measured in the widthwise-shape measurement step, with a quadratic curve or a circular arc. The warped-shape estimation section 35 executes a warped-shape estimation step of estimating the warped shape in the width direction of the metal strip 1 in a no-tension state using the widthwise shape distribution and the approximation curve.

The widthwise-shape measurement device 31 can be disposed at any position on the conveyance path of the metal strip 1 in the continuous annealing facility 100. Preferably, the widthwise-shape measurement device 31 is disposed on the conveyance path downstream of the cooling section 40 in the cooling zone 8. This is because the metal strip 1 cooled in the cooling section 40 undergoes thermal contraction as well as volume expansion associated with phase transformation, resulting in the widthwise shape distribution with an uneven, complex shape. Additionally, if the exit-side equipment 24 in the continuous annealing facility 100 is equipped with the shape correction equipment 13, the widthwise-shape measurement device 31 is preferably disposed on the conveyance path downstream of the shape correction equipment 13. This is because the widthwise uneven shape that develops in the metal strip 1 upon passing through the cooling section 40 is somewhat reduced by passing through the shape correction equipment 13, but an uneven shape distribution still remains to a considerable degree even after the metal strip 1 is conveyed downstream of the shape correction equipment 13. Furthermore, it is preferable to dispose the widthwise-shape measurement device 31 at the inspection table 14 in the continuous annealing facility 100. This is because, by using the widthwise-shape measurement device 31 to estimate the warped shape in a no-tension state along with the inspection of the dimensions and surface quality of the metal strip 1, the shape quality assessment of the warped shape on a recoiling line can be omitted. Additionally, the metal strip 1 is preferably conveyed along the conveyance path where the widthwise-shape measurement device 31 is provided, with a tension of 10 to 100 MPa applied in the longitudinal direction.

Various measurement devices are applicable as the widthwise-shape measurement device 31, as long as they can measure the widthwise shape distribution of the metal strip 1. A distance measurement method using a laser rangefinder can be applied to the widthwise-shape measurement device 31, measuring the distance between each position in the width direction of the metal strip 1 and the measurement device, and determining the widthwise shape distribution based on the measured distances. For the distance measurement method, in addition to a laser rangefinder that measures distance using a straight laser beam, a laser-scanning-type rangefinder that scans with a laser beam in a fan shape to measure the distance to each position in the width direction of the metal strip 1 can also be used. To use a straight-line laser rangefinder, the widthwise-shape measurement device 31 arranges multiple laser rangefinders across the width direction of the metal strip 1 to measure the warped shape at each position. In this case, it is preferable that the number of laser rangefinders arranged in the width direction of the metal strip 1 be 3 or more and 100 or less. More preferably, the number of laser rangefinders is 10 to 20. Using fewer than three laser rangefinders arranged in the width direction of the metal strip 1 makes it difficult to accurately specify the shape distribution in the width direction of the metal strip 1. Additionally, using more than 100 laser rangefinders arranged in the width direction of the metal strip 1 does not cause any change in the measurement accuracy of the shape distribution in the width direction.

For the widthwise-shape measurement device 31, a state in the case of using a laser-scanning-type rangefinder will be described using Fig. 4. Fig. 4 is a simplified illustration of the state in which the widthwise shape distribution of the metal strip 1 is measured using a laser-scanning-type rangefinder. Using the laser-scanning-type rangefinder allows the widthwise shape distribution of the metal strip 1 to be measured with the single measurement device.

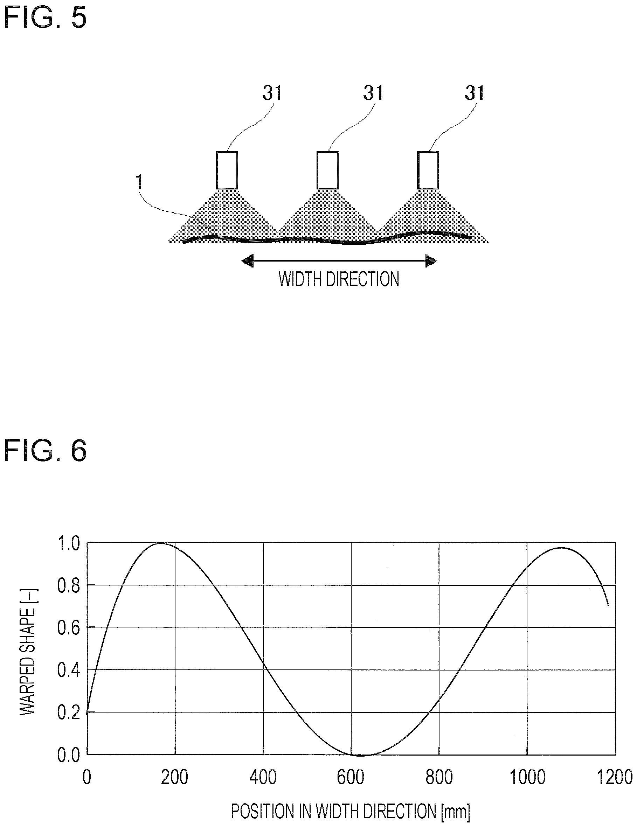

Next, for the widthwise-shape measurement device 31, a state in the case of using multiple laser-scanning-type rangefinders will be described using Fig. 5. Fig. 5 is a simplified illustration of the state in which the metal strip 1 is measured using multiple laser-scanning-type laser rangefinders. As illustrated in Fig. 5, the widthwise-shape measurement device 31 may arrange multiple laser-scanning-type rangefinders in parallel along the width direction of the metal strip 1, measuring the warped shape at each position in the width direction in each widthwise section of the metal strip 1.

The widthwise-shape measurement device 31 may measure the warped shape at each position in the width direction of the metal strip 1 using the light section method. For the widthwise-shape measurement device 31, for example, the LJ-X8000 series from Keyence or Gocator from LMT Technologies may be used to measure the warped shape using the light section method. Here, the light section method is a method in which a laser beam that spreads in a fan shape is emitted toward the width direction of the metal strip 1, and the reflected light from the metal strip 1 is captured by an image sensor, which in turn performs image processing on the captured image to measure the displacement at each position on the surface of the metal strip 1.

The warped shape measurement accuracy of the widthwise-shape measurement device 31 is preferably 1 mm or less, and more preferably 0.5 mm or less. This is to ensure quality assurance regarding the warped shape of the metal strip 1, as the upper limit of the fluctuation range of the warped shape of the metal strip 1 manufactured in the continuous annealing facility 100 is set to 5 to 10 mm.

The widthwise-shape measurement device 31 preferably measures (collects) the warped shape in the width direction of the metal strip 1 at a pitch of 1 m or less along the longitudinal direction of the metal strip 1. The measurement frequency of the widthwise-shape measurement device 31 relative to the metal strip which is continuously conveyed is preferably 10 Hz or higher, and more preferably 20 Hz or higher. This is to ensure the measurement (collection) at a pitch of 1 m or less in the longitudinal direction of the metal strip 1 when the metal strip 1 is conveyed at a speed of 600 m/min or higher by the exit-side equipment 24 in the continuous annealing facility 100. The widthwise-shape measurement device 31 may use the averaged warped shape over a range of 1 to 5 m in the longitudinal direction of the metal strip 1 as the measured values of the warped shape.

Next, an example of the warped shape of the metal strip 1 measured by the widthwise-shape measurement device 31 will be described using Fig. 6. Fig. 6 is a diagram illustrating an example of the warped shape in the width direction of the metal strip 1, measured by the widthwise-shape measurement device 31.

The warped shape illustrated in Fig. 6 represents the widthwise warped shape of a high-strength steel sheet, obtained by measuring the high-strength steel sheet with the widthwise-shape measurement device 31 after rapidly cooling it by water quenching. When a high-strength steel sheet with a tensile strength of 980 MPa or higher is rapidly cooled by water quenching, the cross section in the width direction of the metal strip 1, as illustrated in Fig. 6, takes on a warped shape with a W-shape or an uneven shape that can be approximated by a higher-order function. Here, the warped shape illustrated in Fig. 6 is an example obtained by measuring a high-strength steel sheet with a thickness of 1.2 mm and a width of 1200 mm after completing the cooling step and the temper rolling step. The shape illustrated in Fig. 6 represents the average values of the shape distribution measured at twenty positions, at a pitch of 100 mm, in the longitudinal direction of the metal strip 1. Note that the shape illustrated in Fig. 6 is standardized based on the difference (amplitude) between the maximum height and the minimum height in the width direction.

As illustrated in Fig. 6, the present embodiment targets the metal strip 1, whose widthwise shape distribution in a tension-applied state exhibits a W-shape or a curve (hereinafter may also be referred to as a "cubic approximation curve") that can be approximated by a higher-order function of third degree or higher. That is, uneven residual stress (residual moment) develops within the plane of the metal strip 1 due to rapid cooling, creating an uneven warped shape, and the target is to estimate the warped shape in the width direction of the metal strip 1 in a no-tension state.

The approximation-curve calculation section 34 calculates an approximation curve that approximates the widthwise shape distribution, measured by the widthwise-shape measurement device 31 and acquired by the acquisition section 33, with a quadratic curve or a circular arc. The approximation curve, which is approximated with a quadratic curve or a circular arc (hereinafter may also be referred to as a "quadratic circular arc approximation curve"), is a curve that is symmetric across the width with respect to the center in the width direction of the metal strip 1, and does not have an inflection point in the width direction. Here, due to various residual stresses developing on the inner surface of the metal strip 1, longitudinal warping (L-warping) in the longitudinal direction of the metal strip 1 and widthwise warping (C-warping) in the width direction of the metal strip 1 occur in a no-tension state. The longitudinal warping of the metal strip 1 includes a warped shape that takes the shape of a quadratic circular arc approximation curve, resulting from uniform residual stress generated along the longitudinal direction. The widthwise warping of the metal strip 1 includes a warped shape that takes the shape of a cubic approximation curve, resulting from uneven residual stress. Then, the metal strip 1 conveyed in the continuous annealing facility 100 is, during conveyance, conveyed in a state where tension is always applied in the longitudinal direction (tension-applied state). Therefore, although the metal strip 1 during conveyance appears to have no longitudinal warping in the longitudinal direction, the effects of the residual stress that causes the longitudinal warping (the shape of a quadratic circular arc approximation curve) remain and are instead converted into widthwise warping in the width direction of the metal strip 1, becoming apparent. In other words, calculating a quadratic circular arc approximation curve for the widthwise shape distribution measured by the widthwise-shape measurement device 31 helps specify the effects of the longitudinal warping of the metal strip 1.

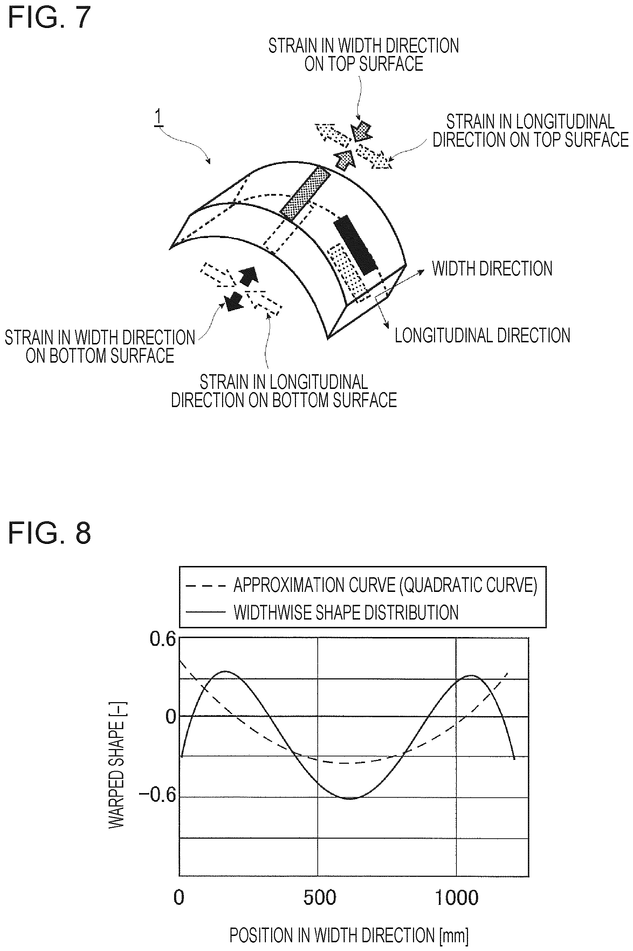

Next, the strain developing on the inner surface of the metal strip 1 when the metal strip 1 is bent in the longitudinal direction will be described using Fig. 7. Fig. 7 is a diagram schematically illustrating the strain developing on the inner surface of the metal strip 1 when the metal strip 1 is bent in the longitudinal direction. In Fig. 7, the upper surface of the metal strip 1 relative to the drawing is referred to as the "top surface," and the lower surface of the metal strip 1 is referred to as the "bottom surface".

As illustrated in Fig. 7, when the metal strip 1 is bent in the longitudinal direction, elongation strain in the longitudinal direction occurs on the top surface of the metal strip 1, while compression strain in the longitudinal direction occurs on the bottom surface. When elongation strain or compression strain occurs in the longitudinal direction of the metal strip 1, strain also develops in the width direction due to Poisson's ratio deformation. In the example illustrated in Fig. 7, compression strain occurs in the width direction on the top surface of the metal strip 1, while elongation strain occurs in the width direction on the bottom surface. Therefore, in the width direction of the metal strip 1, the top surface contracts while the bottom surface elongates, resulting in warping in the width direction. If the metal strip 1 has longitudinal warping in a no-tension state, even when the longitudinal warping appears to be eliminated by the application of tension, similar Poisson's ratio deformation occurs. Additionally, in the example illustrated in Fig. 7, since the bending strain in the longitudinal direction of the metal strip 1 occurs uniformly in the width direction, the strain in the width direction due to Poisson's ratio deformation also occurs uniformly along the width of the metal strip. That is, even when the longitudinal warping appears to be eliminated by the application of tension, the strain in the width direction, which is uniform along the width of the metal strip 1, occurs. As a result, the longitudinal warping converted into widthwise warping takes the shape of a quadratic circular arc approximation curve. As mentioned earlier, the approximation-curve calculation section 34 according to the present embodiment calculates an approximation curve that approximates the widthwise shape distribution, measured by the widthwise-shape measurement device 31, with a quadratic curve or a circular arc, and specifies the effects of the longitudinal warping converted into widthwise warping.

Here, the warped shapes that occur on the metal strip will be specifically described, along with the wavy shape that similarly develops on the metal strip. The shape defects of the metal strip also appear as wavy shape defects, commonly referred to as edge wave or center buckle. The wavy shape occurs when the in-plane stress generated in the longitudinal direction of the metal strip, resulting from the widthwise distribution of elongation (strain) in the longitudinal direction, cannot be maintained within the plane, leading to out-of-plane displacement due to buckling. The warped shape and the wavy shape are common in that they are out-of-plane deformations caused by buckling. However, they differ in that the direction of the residual stress causing the buckling is either in the width direction or the longitudinal direction. Therefore, while wavy shape involves periodic displacement changes in the surface shape along the longitudinal direction of the metal strip, warped shapes do not exhibit periodic displacement of the surface shape in the longitudinal direction of the metal strip. Additionally, while warped shapes have the characteristic that warping in the longitudinal direction and warping in the width direction can be converted into one another, wavy shape does not involve such mutual conversion.

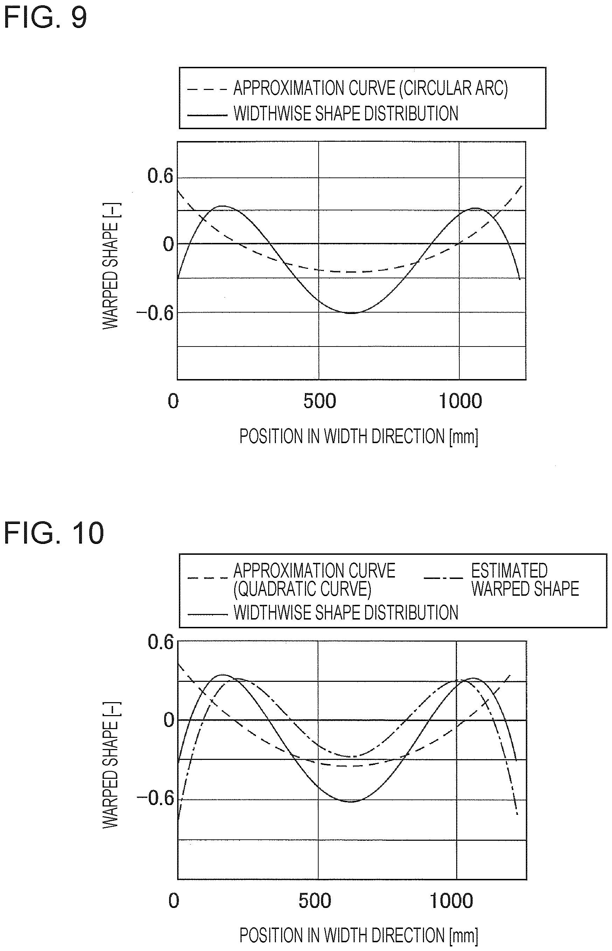

Next, an example of an approximation curve calculated by the approximation-curve calculation section 34 will be described using Fig. 8. Fig. 8 is a diagram illustrating an example of an approximation curve calculated by the approximation-curve calculation section 34. Note that the warped shape illustrated in Fig. 8 is standardized based on the difference (amplitude) between the maximum height and the minimum height in the width direction in a tension-applied state. Similarly, the warped shapes illustrated in Figs. 9 to 13 are standardized based on the difference (amplitude) between the maximum height and the minimum height in the width direction in a tension-applied state.

Fig. 8 illustrates an example in which the widthwise shape distribution (warped shape) measured by the widthwise-shape measurement device 31 is approximated with a quadratic curve in a state where a tension of 15 kN is applied to a high-strength steel sheet with a thickness of 1.0 mm and a width of 1220 mm. When using a quadratic curve as an approximation curve, the relationship between the position x in the width direction and the warped shape y is represented by the function expression indicated in Equation (1) below, with a, b, and c as constants. Specifically, the calculation is performed to determine the constants to minimize the error, in the width direction, between the widthwise shape distribution, which includes the measured values, and the warped shape y determined by Equation (1).
[Eq. 1]

$$y = a x^2 + b x + c \quad \cdot\cdot\cdot (1)$$

Additionally, Fig. 9 illustrates an example in which the widthwise shape distribution (warped shape) measured by the widthwise-shape measurement device 31 is approximated with a circular arc in a state where a tension of 15 kN is applied similarly to a high-strength steel sheet with a thickness of 1.0 mm and a width of 1220 mm. When using a circular arc as an approximation curve, the relationship between the position x in the width direction and the warped shape y is represented by the function expression indicated in Equation (2) below, with d, e, and r as constants. Specifically, also in the case of performing circular arc approximation, the calculation is performed to determine the constants to minimize the error, in the width direction, between the widthwise shape distribution, which includes the measured values, and the warped shape y determined by Equation (2).
[Eq. 2]

$$y = \sqrt{r^2 - (x - d)^2} + e \quad \cdot\cdot\cdot (2)$$

Using the widthwise shape distribution of the metal strip 1 measured by the widthwise-shape measurement device 31 and the approximation curve calculated by the approximation-curve calculation section 34, the warped-shape estimation section 35 estimates the warped shape in the width direction of the metal strip 1 in a no-tension state. Specifically, the warped-shape estimation section 35 estimates the warped shape in the width direction of the metal strip 1 in a no-tension state by subtracting the approximation curve calculated by the approximation-curve calculation section 34 from the widthwise shape distribution measured by the widthwise-shape measurement device 31. In other words, the warped shape in a no-tension state is specified by subtracting, from the value of the warped shape at each position in the width direction, measured by the widthwise-shape measurement device 31, the value of the warped shape at a corresponding widthwise position of the approximation curve, calculated by the approximation-curve calculation section 34.

Here, an example of the warped shape in the width direction in a no-tension state, estimated by the warped-shape estimation section 35 using the widthwise shape distribution in a tension-applied state, measured by the widthwise-shape measurement device 31, and the approximation curve (quadratic curve), calculated by the approximation-curve calculation section 34, will be described using Fig. 10. Fig. 10 is a diagram illustrating an example of the warped shape in the width direction in a no-tension state, which is estimated using the widthwise shape distribution in a tension-applied state and its approximation curve (quadratic curve).

As illustrated in Fig. 10, the warped shape (estimated warped shape) in a no-tension state, estimated by the warped-shape estimation section 35, has a slightly increased difference between the maximum and minimum values of the warped shape in the width direction and a reduced height difference between the peak of the warped shape and the valley in the center portion of the width, compared to the warped shape measured with a tension of 15 kN applied. This is thought to be because the longitudinal warping of the metal strip 1 is converted into warping in the width direction, which primarily increases the amplitude of the warp height near the center portion of the width.

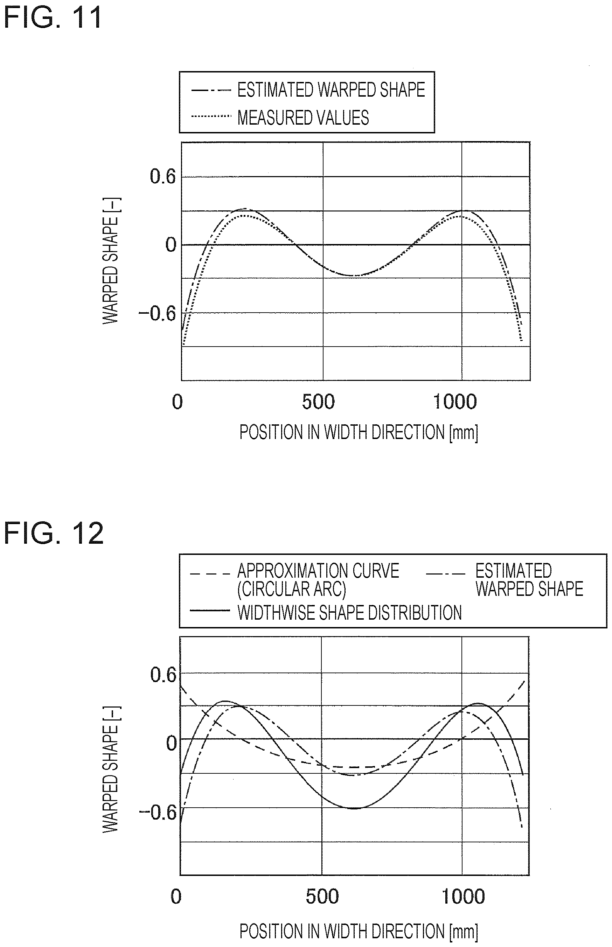

Next, an example that compares the estimated warped shape (see Fig. 10) with the measured values of the warped shape in a no-tension state will be described using Fig. 11. Fig. 11 is a diagram illustrating an example that compares the estimated warped shape with the measured values of the warped shape in a no-tension state.

As illustrated in Fig. 11, in the case of estimating the warped shape in the width direction in a no-tension state based on the widthwise shape distribution measured in a tension-applied state, it has been confirmed that the estimation accuracy of the estimated warped shape is satisfactory.

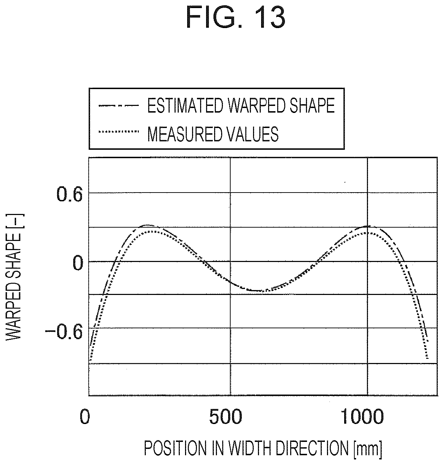

Additionally, an example of the warped shape in the width direction in a no-tension state, estimated using the widthwise shape distribution in a tension-applied state and an approximation curve that approximates it with a circular arc, will be described using Fig. 12. Fig. 12 is a diagram illustrating an example of the warped shape in the width direction in a no-tension state, estimated using the widthwise shape distribution in a tension-applied state and its approximation curve (see Fig. 9). As illustrated in Fig. 12, also in the case of using an approximation curve approximated with a circular arc, the estimated warped shape has a slightly increased difference between the maximum and minimum values of the warped shape in the width direction and a reduced height difference between the peak of the warped shape and the valley in the center portion of the width, compared to the warped shape measured with a tension of 15 kN applied. As illustrated in Fig. 13, which illustrates the result of comparison with the measured values, also in the case of comparing the estimated warped shape, estimated using an approximation curve approximated with a circular arc, with the measured values of the warped shape in a no-tension state, it has been confirmed that the estimation accuracy of the estimated warped shape is satisfactory.

As has been described above, using the metal-strip warped-shape estimation method according to the present embodiment, the warped shape in the width direction in a no-tension state can be estimated based on the widthwise shape distribution in a tension-applied state. The warped-shape estimation method for the metal strip 1 is preferably applied to the metal strip 1 after cooling, considering that the metal strip 1 cooled in the cooling zone 8 of the continuous annealing facility 100 includes warped shapes that take the shape of a quadratic circular arc approximation curve in the width direction as well as the shape of a cubic approximation curve. In this case, it is preferable to dispose the widthwise-shape measurement device 31 between the cooling section 40 and the coiler 15 in the continuous annealing facility 100. Additionally, the warped shape measurement step using the widthwise-shape measurement device 31 is preferably executed after the metal strip 1 is cooled by the cooling section 40, and before the metal strip 1 is wound by the coiler 15 in the continuous annealing facility 100. This is because, in the continuous annealing facility 100, the warped shape in a no-tension state can be estimated without stopping the conveyance of the metal strip 1.

Using the warped-shape estimation method for the metal strip 1 described above, it is preferable to perform an acceptability determination of the metal strip 1 as part of quality inspection, based on the result of estimating the warped shape of the metal strip 1 in a no-tension state. This is because, by conducting the quality inspection of the warped shape during the conveyance (online) of the metal strip 1, it becomes possible to easily and quickly determine whether the warped shape of the metal strip 1 meets the quality standards. Additionally, it becomes possible to omit an additional step for conducting the quality inspection of the warped shape. In the acceptability determination of the warped shape (acceptability determination method), it is determined to be unacceptable when the warp amount in the width direction exceeds a preset upper limit of the warp amount (e.g., 10 mm), and acceptable when it is less than or equal to the upper limit of the warp amount. Additionally, the upper limit of the warp amount, used as the quality standard, may be changed each time based on the number of uneven portions or the number of intervals in the warped shape estimated by the warped-shape estimation section 35. If the warped shape in a no-tension state has many uneven portions and a short interval, even if the warp amount is small, processing troubles are likely to occur during secondary processing, such as in press forming. Here, the "warp amount" refers to the difference between the maximum and minimum values of the warped shape.

Furthermore, it is preferable to conduct the acceptability determination of the metal strip 1 using the above-mentioned metal-strip warped-shape estimation method, and to ship metal strips determined to be acceptable (metal-strip manufacturing method). This is because the metal strip 1 whose warped shape is less than or equal to a preset quality defect reference value is manufactured, and the need for an additional step of conducting quality inspection of the warped shape is eliminated, enabling the metal strips to be manufactured at lower costs. In this case, it is preferable to estimate the warped shape in the width direction of the metal strip 1 in a no-tension state at a pitch of 5 to 20 m in the longitudinal direction of the metal strip 1, and to manufacture only the portions deemed acceptable as the metal strip 1. This is because it is ensured that the warped shape meets the quality standards over the entire length of the metal strip 1, which serves as the product.

EXAMPLE

Hereinafter, an example performed using the metal-strip warped-shape estimation method according to the present embodiment will be described.

In this example, in the continuous annealing facility 100 illustrated in Fig. 1, the widthwise-shape measurement device 31 was disposed at the inspection table 14 in the exit-side equipment 24. The metal strip 1 was subjected to the application of a tension of 20 to 60 MPa when passing through the widthwise-shape measurement device 31. The metal strip 1 manufactured in the continuous annealing facility 100 was a high-strength steel sheet with a thickness of 1.0 to 1.8 mm, a width of 800 to 1250 mm, and a tensile strength in the range of 1310 to 1470 MPa. The total weight of the high-strength steel sheet used in the example was 15,000 tons.

The cooling section 40 employing the water cooling method, illustrated in Fig. 2, was disposed in the cooling zone 8 of the continuous annealing facility 100. The cooling section 40 was provided with the water cooling nozzle unit 41, equipped with nozzles for injecting water, i.e., cooling fluid, onto the front side and the back side of the metal strip 1. In this example, the cooling conditions of the cooling section 40 were controlled such that the cooling start temperature of the metal strip 1 was set to 740°C and the cooling end temperature was set to 30°C. The flow rate of the cooling water injected from the water cooling nozzle unit 41 was set to 1000 $m^3$/hr, and the water temperature was set to 30°C. In this case, the high-strength steel sheet (metal strip 1) used in this example had a warped shape distribution in the width direction, which could be approximated with a cubic approximation curve, due to the effects of thermal contraction and phase transformation in the cooling section 40.

The widthwise-shape measurement device 31 disposed at the inspection table 14 was configured using laser-scanning-type rangefinders that measure the warped shape using the distance measurement method. Two laser-scanning-type rangefinders were arranged in parallel in the width direction of the metal strip 1. By scanning with a laser beam along the width direction of the metal strip 1, the shape distribution in the width direction (widthwise shape distribution) of the metal strip 1 was measured. The measurement frequency of the widthwise-shape measurement device 31 was set to 20 Hz. Therefore, under the condition of a maximum line speed of 600 m/min for the metal strip 1 in the exit-side equipment 24 of the continuous annealing facility 100, measurement data of the warped shape was collected at an interval of 1 m in the longitudinal direction of the metal strip 1.

Based on the measurement result of the widthwise shape distribution of the metal strip 1 in a tension-applied state, measured by the widthwise-shape measurement device 31, the approximation-curve calculation section 34 calculated an approximation curve, approximated with a quadratic curve in the width direction of the metal strip 1, at each position along the longitudinal direction of the metal strip 1. By subtracting the calculated approximation curve from the measurement result of the widthwise shape distribution, the warped-shape estimation section 35 estimated the warped shape in the width direction of the metal strip 1 in a no-tension state, at each position in the longitudinal direction of the metal strip 1 (estimated warped shape).

In this example, an acceptability determination section for the warped shape of the metal strip 1 was provided, and the upper limit for determining acceptability based on the warp amount of the warped shape in the width direction (the difference between the maximum and minimum values of the warped shape) was set to 10 mm. Note that the warp amount was calculated from the warped shape in the width direction, excluding the 10-mm edge portions of the width of the metal strip 1. In this case, the 10-mm range from the edge portions of the width of the metal strip 1 was trimmed (edge-cutting) at the recoiling line, not becoming part of the product. The acceptability determination section determined at each position in the longitudinal direction of the metal strip 1 whether the warp amount of the warped shape was less than or equal to the upper limit. In the acceptability determination, it was determined to be acceptable when the estimated warped shape at each position in the longitudinal direction of the metal strip 1 was less than or equal to the upper limit, and unacceptable when the estimated warped shape exceeded the upper limit at least at any of the positions.

In this example, after the metal strip 1 was wound into a coil by the coiler 15 in the continuous annealing facility 100, the coiled metal strip was sent to the inspection line (recoiling line). At the inspection line, the warped shape in the width direction of the metal strip in a no-tension state was measured (actually measured warped shape).

As a result, the total number of the number of metal strips for which both the determination result of the acceptability determination section and the actually measured warped shape were deemed acceptable, and the number of metal strips for which both the determination result of the acceptability determination section and the actually measured warped shape were deemed unacceptable, amounted to a percentage (accuracy rate) of 88% relative to the number of metal strips that were subjected to acceptability determination.

Additionally, the approximation-curve calculation section 34 also calculated an approximation curve, approximated with a circular arc in the width direction of the metal strip 1, at each position along the longitudinal direction of the metal strip 1, based on the measurement result of the widthwise shape distribution of the metal strip 1 in a tension-applied state, measured by the widthwise-shape measurement device 31. Also, in the case of calculating a circular arc as an approximation curve, the warped-shape estimation section 35 subtracted the calculated approximation curve (circular arc) from the measurement result of the widthwise shape distribution, thereby estimating the warped shape in the width direction of the metal strip 1 in a no-tension state, at each position in the longitudinal direction of the metal strip 1.

As a result, the total number of the number of metal strips for which both the determination result of the acceptability determination section and the actually measured warped shape were deemed acceptable, and the number of metal strips for which both the determination result of the acceptability determination section and the actually measured warped shape were deemed unacceptable, amounted to a percentage (accuracy rate) of 85% relative to the number of metal strips that were subjected to acceptability determination.

In contrast, as a comparative example, the acceptability determination was made, without estimating the warped shape in the width direction of the metal strip in a no-tension state, by using the widthwise shape distribution of the metal strip in a tension-applied state, measured by the widthwise-shape measurement device 31. In other words, in the widthwise shape distribution of the metal strip in a tension-applied state, it was determined whether the warp amount of the warped shape in the width direction was less than or equal to the upper limit, and this result was compared with the acceptability determination result of the actually measured warped shape. As a result, in the comparative example, the total number of the number of metal strips for which both the widthwise shape distribution and the actually measured warped shape were deemed acceptable, and the number of metal strips for which both the widthwise shape distribution and the actually measured warped shape were deemed unacceptable, amounted to a percentage (accuracy rate) of 60% relative to the number of metal strips that were subjected to acceptability determination.

From the above, it has been confirmed that, by using the metal-strip warped-shape estimation method according to the present embodiment, for the warped shape in the width direction caused by rapid cooling of a metal strip, based on the warped shape in the width direction with tension applied in the longitudinal direction, the warped shape in the width direction with the tension relieved can be estimated.

Reference Signs List

1 metal strip
2 payoff reel
3 welding machine
4 entry-side looper
5 preheating zone
6 heating zone
7 soaking zone
8 cooling zone
9 reheating zone
10 overaging zone
11 final cooling zone
12 exit-side looper
13 shape correction equipment
14 inspection table
15 coiler
20 entry-side equipment
21 furnace equipment
22 annealing equipment
23 reheating equipment
24 exit-side equipment
30 warped-shape estimation equipment
31 widthwise-shape measurement device
32 warped-shape estimation device
33 acquisition section
34 approximation-curve calculation section
35 warped-shape estimation section
36 output section
40 cooling section
41 water cooling nozzle unit
43 dipping tank
44 cooling water

45 pinch rolls
46, 47 deflector rolls
48 wringer rolls
49 drying furnace
100 continuous annealing facility

**Claims**

1. A metal-strip warped-shape estimation method for estimating, based on a shape in a width direction of a metal strip in a tension-applied state where tension in a longitudinal direction is applied, a warped shape in the width direction of the metal strip in a no-tension state where the tension is relieved, comprising:

   a widthwise-shape measurement step of measuring a widthwise shape distribution of the metal strip in the tension-applied state;
   an approximation-curve calculation step of calculating an approximation curve that approximates the widthwise shape distribution, measured in the widthwise-shape measurement step, with a quadratic curve or a circular arc; and
   a warped-shape estimation step of estimating the warped shape in the width direction of the metal strip in the no-tension state using the widthwise shape distribution and the approximation curve.

2. The metal-strip warped-shape estimation method according to Claim 1, wherein, in the widthwise-shape measurement step, the widthwise shape distribution of the metal strip is measured by a distance measurement method or a light section method.

3. The metal-strip warped-shape estimation method according to Claim 1 or 2, wherein the widthwise-shape measurement step is executed after the metal strip is cooled by a cooling section in a continuous annealing facility and before the metal strip is wound by a coiler in the continuous annealing facility.

4. A metal-strip acceptability determination method for determining acceptability of the metal strip based on the warped shape of the metal strip in the no-tension state, estimated by the metal-strip warped-shape estimation method according to any one of Claims 1 to 3.

5. A metal-strip manufacturing method for determining acceptability of the metal strip using the metal-strip acceptability method according to Claim 4, and manufacturing the metal strip determined to be acceptable.

6. Metal-strip warped-shape estimation equipment that estimates, based on a shape in a width direction of a metal strip in a tension-applied state where tension in a longitudinal direction is applied, a warped shape in the width direction of the metal strip in a no-tension state where the tension is relieved, comprising:

   a widthwise-shape measurement device that measures a widthwise shape distribution of the metal strip in the tension-applied state; and
   a metal-strip warped-shape estimation device that estimates the warped shape in the width direction of the metal strip in the no-tension state,
   wherein the metal-strip warped-shape estimation device includes: an acquisition section that acquires the widthwise shape distribution of the metal strip from the widthwise-shape measurement device; an approximation-curve calculation section that calculates an approximation curve that approximates the widthwise shape distribution, measured by the widthwise-shape measurement device, with a quadratic curve or a circular arc; and a warped-shape estimation section that estimates the warped shape in the width direction of the metal strip in the no-tension state using the widthwise shape distribution and the approximation curve.

7. The metal-strip warped-shape estimation equipment according to Claim 6, wherein the widthwise-shape measurement device measures the widthwise shape distribution of the metal strip using a distance measurement method or a light section method.

8. The metal-strip warped-shape estimation equipment according to Claim 6 or 7, wherein the widthwise-shape measurement device is disposed between a cooling section and a coiler in a continuous annealing facility that performs heat treatment on the metal strip.

FIG. 1

# FIG. 2

# FIG. 3

<u>30</u>

```
                        ┌─────────────────────────┐  31
                        │   WIDTHWISE-SHAPE        │
                        │ MEASUREMENT DEVICE       │
                        └─────────────────────────┘
                                                      32: WARPED-SHAPE
        ┌───────────────────────────────────────┐      ESTIMATION DEVICE
        │                   │                    │
        │          ┌────────▼─────────┐  33      │
        │          │ ACQUISITION SECTION │        │
        │          └────────┬─────────┘          │
        │                   │                    │
        │          ┌────────▼─────────┐  34      │
        │          │ APPROXIMATION-CURVE │        │
        │          │ CALCULATION SECTION │        │
        │          └────────┬─────────┘          │
        │                   │                    │
        │          ┌────────▼─────────┐  35      │
        │          │  WARPED-SHAPE    │          │
        │          │ ESTIMATION SECTION │        │
        │          └────────┬─────────┘          │
        │                   │                    │
        └───────────────────┼────────────────────┘
                            │
                   ┌────────▼─────────┐
                   │  OUTPUT SECTION  │──── 36
                   └──────────────────┘
```

# FIG. 4

WIDTH DIRECTION

FIG. 5

31        31        31

1

WIDTH DIRECTION

FIG. 6

WARPED SHAPE [-]

POSITION IN WIDTH DIRECTION [mm]

## FIG. 7

STRAIN IN WIDTH DIRECTION
ON TOP SURFACE

STRAIN IN LONGITUDINAL
DIRECTION ON TOP SURFACE

WIDTH DIRECTION

LONGITUDINAL DIRECTION

STRAIN IN WIDTH DIRECTION
ON BOTTOM SURFACE

STRAIN IN LONGITUDINAL
DIRECTION ON BOTTOM SURFACE

## FIG. 8

- - - APPROXIMATION CURVE (QUADRATIC CURVE)
—— WIDTHWISE SHAPE DISTRIBUTION

WARPED SHAPE [-]

POSITION IN WIDTH DIRECTION [mm]

FIG. 9

FIG. 10

# FIG. 11

Legend:
- — · — ESTIMATED WARPED SHAPE
- ·········· MEASURED VALUES

Y-axis: WARPED SHAPE [-] (0.6, 0, -0.6)
X-axis: POSITION IN WIDTH DIRECTION [mm] (0, 500, 1000)

# FIG. 12

Legend:
- — — — APPROXIMATION CURVE (CIRCULAR ARC)
- — · — ESTIMATED WARPED SHAPE
- ——— WIDTHWISE SHAPE DISTRIBUTION

Y-axis: WARPED SHAPE [-] (0.6, 0, -0.6)
X-axis: POSITION IN WIDTH DIRECTION [mm] (0, 500, 1000)

## FIG. 13

## INTERNATIONAL SEARCH REPORT

| International application No. |
| --- |
| **PCT/JP2023/027674** |

**A. CLASSIFICATION OF SUBJECT MATTER**

*G01B 11/24*(2006.01)i; *C21D 9/56*(2006.01)i
FI:    G01B11/24 M; C21D9/56 101A

According to International Patent Classification (IPC) or to both national classification and IPC

**B. FIELDS SEARCHED**

Minimum documentation searched (classification system followed by classification symbols)

G01B11/00-11/30; C21D9/54-9/66

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 6-102036 A (NIPPON STEEL CORP.) 12 April 1994 (1994-04-12)<br>entire text, all drawings | 1-8 |
| A | JP 2-66125 A (SUMITOMO METAL IND., LTD.) 06 March 1990 (1990-03-06)<br>entire text, all drawings | 1-8 |
| A | JP 2008-107241 A (NIPPON STEEL CORP.) 08 May 2008 (2008-05-08)<br>entire text, all drawings | 1-8 |
| A | JP 2016-140898 A (JFE STEEL CORP.) 08 August 2016 (2016-08-08)<br>entire text, all drawings | 1-8 |
| A | JP 5-192705 A (NIPPON STEEL CORP.) 03 August 1993 (1993-08-03)<br>entire text, all drawings | 1-8 |

☐ Further documents are listed in the continuation of Box C.       ☑ See patent family annex.

| | |
| --- | --- |
| * Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **11 September 2023** | **26 September 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

# EP 4 556 843 A1

## INTERNATIONAL SEARCH REPORT
### Information on patent family members

International application No.

**PCT/JP2023/027674**

| Patent document cited in search report | | | Publication date (day/month/year) | Patent family member(s) | Publication date (day/month/year) |
|---|---|---|---|---|---|
| JP | 6-102036 | A | 12 April 1994 | (Family: none) | |
| JP | 2-66125 | A | 06 March 1990 | (Family: none) | |
| JP | 2008-107241 | A | 08 May 2008 | (Family: none) | |
| JP | 2016-140898 | A | 08 August 2016 | (Family: none) | |
| JP | 5-192705 | A | 03 August 1993 | (Family: none) | |

Form PCT/ISA/210 (patent family annex) (January 2015)

23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2066125 A

- JP 6102036 A